(19) Europäisches Patentamt

European Patent Office

Office européen des brevets

(11) Veröffentlichungsnummer: **0 269 847 B1**

(12) **EUROPÄISCHE PATENTSCHRIFT**

(45) Veröffentlichungstag der Patentschrift: **19.02.92**

(21) Anmeldenummer: **87115681.6**

(22) Anmeldetag: **26.10.87**

(51) Int. Cl.⁵: **G21C 9/00**

(54) **Kernkraftwerk mit einer Sicherheitshülle.**

(30) Priorität: **06.11.86 DE 3637795**

(43) Veröffentlichungstag der Anmeldung:
**08.06.88 Patentblatt 88/23**

(45) Bekanntmachung des Hinweises auf die
Patenterteilung:
**19.02.92 Patentblatt 92/08**

(84) Benannte Vertragsstaaten:
**BE CH DE ES FR IT LI NL SE**

(56) Entgegenhaltungen:
**WO-A-88/01901**
**DE-A- 3 212 265**
**DE-A- 3 435 256**
**DE-B- 1 124 527**
**US-A- 4 567 016**

**NUCLEAR NEWS, Band 30, Nr. 10, August
1987, Seite 61, La Grange Park, Illinois, US;
"Containment vents to be on all units before
'89"**

(73) Patentinhaber: **SIEMENS AKTIENGESELL-
SCHAFT**
**Wittelsbacherplatz 2**
**W-8000 München 2(DE)**

(72) Erfinder: **Eckardt, Bernd, Dipl.-Ing.**
**Kastanienweg 14**
**W-6454 Bruchköbel(DE)**

Rank Xerox (UK) Business Services

**Beschreibung**

Die Erfindung betrifft ein Kernkraftwerk mit einer Sicherheitshülle zum Einschluß von Aktivitätsträgern und mit einem Auslaß als Überdrucksicherung, der aus der Sicherheitshülle über ein Filter und einen Kamin in die Atmosphäre führt, wobei das Filter einen Venturiwäscher und einen Behälter mit einer Waschflüssigkeit umfaßt, in die der Venturiwäscher integriert ist, wobei der Venturiwäscher mit dem Auslaß der Sicherheitshülle verbunden ist und wobei der Behälter an seiner Oberseite einen Gasauslaß aufweist.

Ein solcher Kernreaktor ist z.B. in der WO 88/01901 beschrieben.

Aus der DE-C-26 34 356 ist ein anderer Kernreaktor bekannt. Er besitzt als Sicherheitshülle eine Stahlkugel, die von einem Betongebäude umschlossen ist. In dem Betongebäude sind Auslaßöffnungen vorgesehen, die mit einem Überdruckventil absperrbar sind. Von den Auslaßöffnungen führen Leitungen in bestimmte Bereiche innerhalb eines Erdhügels, der sich über dem Betongebäude erhebt. Dort soll eine Schüttung aus grobem Kies eine Filterung und Kondensation von Dampf bewirken, wenn es im Inneren des Betongebäudes zu einer Störung kommt, die die Berstfestigkeit zu überschreiten droht. Von der Sicherheitshülle gehen ebenfalls Auslaßleitungen aus, in denen Sicherheitsventile für einen bestimmten Ansprechdruck sorgen. Die Auslaßleitungen führen entweder in das Betongebäude oder unmittelbar in die außerhalb des Betongebäudes liegende Kiesschicht, damit ohne Beeinträchtigung des Ringraumes zwischen der Sicherheitshülle und dem Betongebäude eine Druckentlastung für die Sicherheitshülle geschaffen werden kann.

Die Erfindung geht von der Aufgabe aus, eine Entlastung der Sicherheitshülle auch für den Fall zu ermöglichen, daß für die Aufnahme des Auslaßmediums aus der Sicherheitshülle kein Erdhügel zur Verfügung steht, der eine weiträumige Verteilung gestattet. Hierbei besteht eine besondere Schwierigkeit darin, daß das Auslaßmedium Aerosole umfaßt, die wegen ihrer geringen Größe im Bereich von etwa 1 μm nur schwierig zurückzuhalten sind, besonders dann, wenn nur ein Filter mit einem eng begrenzten Volumen zur Verfügung steht.

Erfindungsgemäß ist vorgesehen, daß bei einem Kernkraftwerk der eingangs genannten Art dem Venturiwäscher ein Tropfenabscheider, eine Drossel und ein Schwebstoffilter nachgeschaltet sind.

Beim Einsatz der erfindungsgemaßen Filteranordnung wird unter Ausnutzung des vorhandenen Druckes des Auslaßmediums in einem mit Waschflüssigkeit überdeckten Zerstäuber, wie der Venturiwäscher allgemein bezeichnet werden kann, das Auslaßmedium aus der Sicherheitshülle so beschleunigt, daß in passiver Weise, d.h. ohne Hilfsenergie, eine höchst wirksame Aerosolbenetzung sowie eine sich daran anschließende Tropfen- und Aerosolabscheidung stattfinden. Darüber hinaus kann mit der gleichzeitig angesaugten umgebenden Waschflüssigkeit auch eine Jodadsorption erreicht werden. Diese kann noch durch das Einbringen von geeigneten Chemikalien, z.B. alkalischen Substanzen, in die Waschflüssigkeit gefördert werden.

Die Ansaugung der Waschflüssigkeit in den Venturiwäscher erfolgt nicht nur durch den darin erzeugten Unterdruck, sondern auch durch den Druck der über dem Venturiwäscher stehenden Flüssigkeitssäule der Waschflüssigkeit. Wird ein noch größerer Druckunterschied gewünscht, so kann zur Steigerung der Einspeisemenge vorteilhaft eine Strahlpumpe zum Ansaugen und Vorverdichten der Waschflüssigkeit verwendet werden.

Die im Tropfenabscheider zurück gehaltene Waschflüssigkeit fließt dann mit den darin angereicherten Jodpartikeln und Aerosolen in das Waschflüssigkeitsvolumen zurück. Danach wird das Auslaßmedium bei Bedarf nochmals durch eine Wasservorlage geleitet.

Das entfeuchtete und gereinigte Auslaßmedium wird einem Kamin zugeleitet. Soweit erforderlich, wird aber auch noch eine Zumischung von Umgebungsluft vorgesehen, um eine weitere Verdünnung schädlicher Gasanteile, beispielsweise von Wasserstoff $H_2$, zu erhalten. Ferner ist es möglich, dem Venturiwäscher zur Erreichung noch höherer Abscheidegrade z.B. Fasertropfenabscheider nachzuschalten. Bei besonders hohen Anforderungen wird durch eine Drosselung des Auslaßmediums eine Überhitzung erreicht, die für die anschließende Reinigung in einem Schwebstoffilter, z.B. in einem "Klasse S"-Metallfaserfilter, günstig ist.

Der Venturiwäscher ist im Hinblick auf eine Erhitzung der Waschflüssigkeit kurz unterhalb des Flüssigkeitsspiegels, z.B. in 1 m Wassertiefe angeordnet, damit er außerhalb einer gegebenenfalls auftretenden Siedezone liegt. Ferner kann man bei der Bemessung der Flüssigkeitssäule über dem Venturiwäscher berücksichtigen, daß mehrere Venturiwäscher, die parallelgeschaltet sind, d.h. an eine gemeinsame Einlaßleitung angeschlossen sind, vorteilhafterweise in unterschiedlicher Höhe angeordnet sind. Damit erreicht man nämlich, daß bei Teillastbetrieb nicht alle parallelgeschalteten Venturiwäscher gleichmäßig arbeiten, sondern daß für die einzelnen Venturiwäscher optimale Betriebsbedingungen beibehalten werden.

Dem Venturiwäscher kann auch ein Wärmetauscher vorgeschaltet werden, um die Temperaturbedingungen zu beeinflussen. Dazu zählt insbesondere eine Abkühlung des dem Venturiwäscher zuströmenden Auslaßmediums aus der Sicherheitshülle, damit Sattdampf entsteht.

Zur näheren Erläuterung der Erfindung werden anhand einer Zeichnung zwei Ausführungsbeispiele beschrieben. Dabei zeigt Figur 1 einen vereinfachten Übersichtsplan und die Figuren 2 und 3 Einzelheiten aus dem Übersichtsplan für die beiden Ausführungsbeispiele.

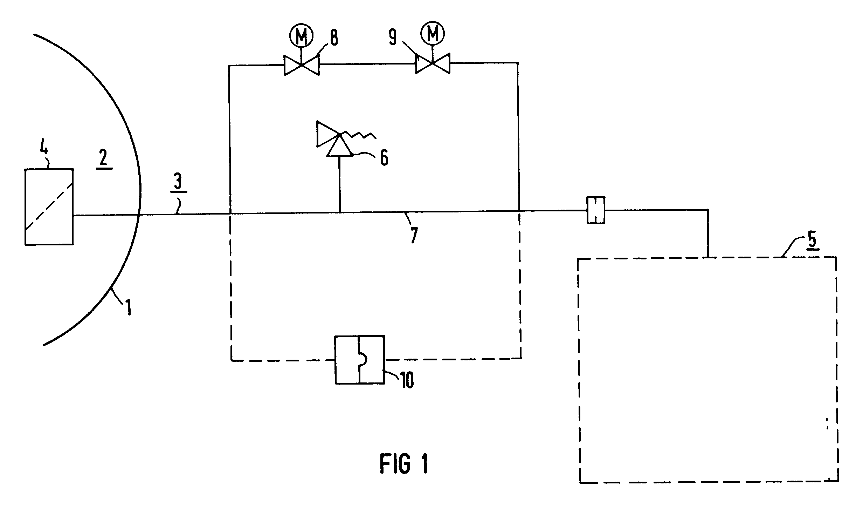

In Figur 1 ist mit 1 die Sicherheitshülle eines Druckwasserreaktors bezeichnet, die in bekannter Weise als Stahlkugel ausgeführt ist. Die Sicherheitshülle 1 umschließt das Primärsystem eines Druckwasserreaktors für z.B. 1300 $MW_e$. Dazu gehören auch nicht dargestellte Dampferzeuger, mit denen eine thermische Leistung von etwa 4000 MW als Dampf in eine Maschinenhalle geliefert wird, die neben der Sicherheitshülle angeordnet ist. Die Sicherheitshülle 1 ist mit einem dickwandigen Betongebäude umgeben, so daß wie bei dem Druckwasserreaktor nach der DE-PS 26 34 356 ein zweiter Einschluß gegeben ist, der hier nicht betrachtet wird.

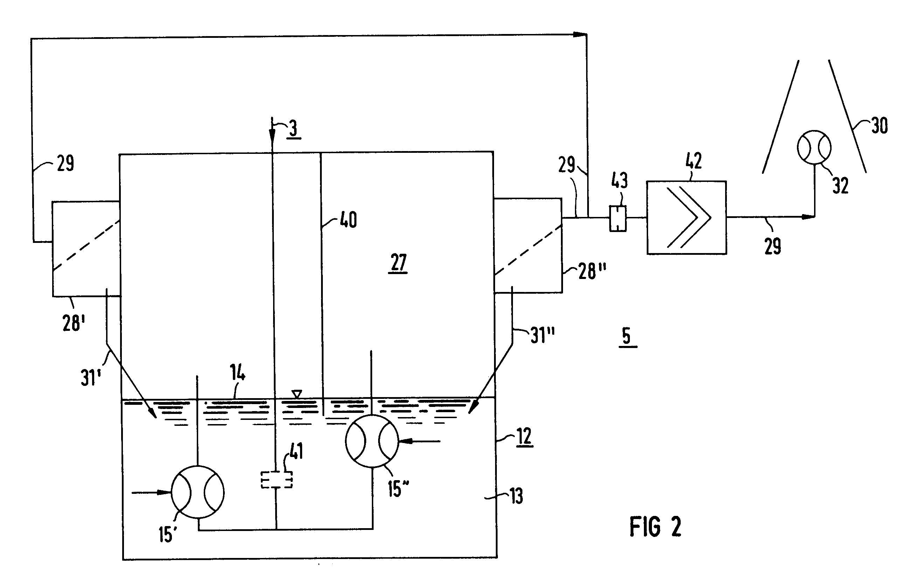

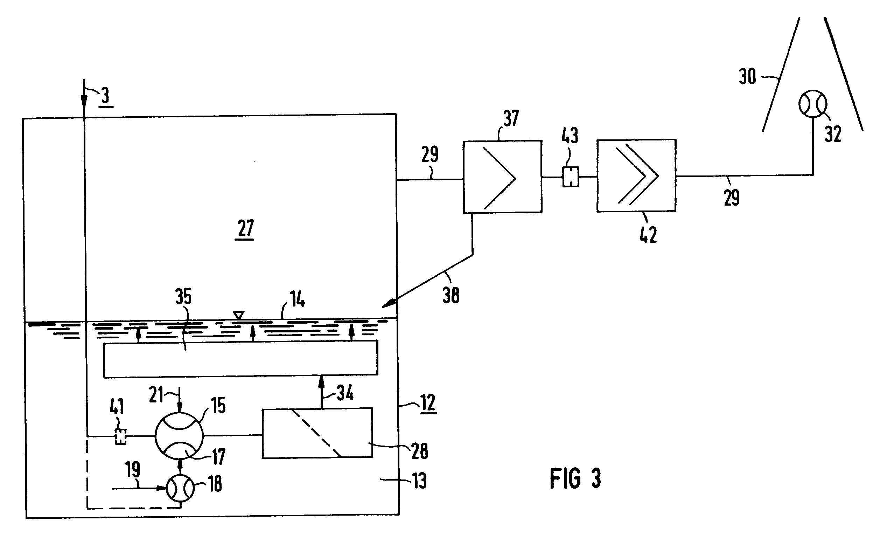

In das Innere 2 der Sicherheitshülle 1 ragt als Auslaß 3 eine Leitung, an deren innerem Ende ein Tropfenabscheider 4 vorgesehen ist. Durch den Auslaß 3 wird in einem Störfall, bei dem ein Überdruck entsteht, das den Überdruck bewirkende Medium, also Dampf und Gas, abgeführt, bevor der Berstdruck der Sicherheitshülle 1 erreicht wird. Die Leitung 3 führt zu einer Filter- und Abblaseanordnung, die als Ganzes mit 5 bezeichnet ist und in ihrem Aufbau anhand der Figuren 2 und 3 näher erläutert ist.

An den Auslaß 3 ist ferner eine Druckhalte- und Begrenzungseinrichtung angeschlossen, die in der FIG 1 durch ein Sicherheitsventil 6 symbolisiert ist. In der Praxis kann sie z.B. aus der Parallelschaltung von je zwei in Reihe liegenden eigenmediumbetätigten Sicherheitsventilen bestehen, die den Druck im Sicherheitsbehälter auf einen Wert von z.B. 6 bar begrenzen. Parallel zu einem Leitungsstück 7 mit dem Sicherheitsventil 6 sind zwei motorbetätigte oder auch von Hand verstellbare Absperrventile 8 und 9 angeordnet, die in Reihe liegen oder mittels einer separaten Leitung auf die Filter- und Abblase-Anordnung 5 geführt sind. Als Alternative ist in der Figur 1 noch gestrichelt dargestellt, daß der Auslaß 3 mit einer Berstmembran 10 versehen ist, die einen Ansprechdruck von z.B. 7 bar hat.

In Figur 2 ist dargestellt, daß der Auslaß 3 der Sicherheitshülle 1 in einen Behälter 12 führt, der einen wesentlichen Teil der Filter- und Abblase-Anordnung 5 bildet. Der Behälter 12 umfaßt in seinem unteren Bereich eine Waschflüssigkeit 13, insbesondere ein Wasservolumen, dessen Flüssigkeitsspiegel mit 14 bezeichnet ist. Er liegt etwa in 1/2 bis 3/4 der Höhe des Behälters 12. In der Waschflüssigkeit 13 ist ein Venturiwäscher 15 in Form einer Strahlpumpe angeordnet. Der Venturiwäscher 15 liegt mindestens 1 m unter dem Flüssigkeitsspiegel 14.

Eine Saugseite 17 des Venturiwäschers 15 kann an den Auslaß 3 über eine weitere Strahlpumpe 18 angeschlossen werden, mit der dem aus der Sicherheitshülle 1 kommenden Auslaßmedium verstärkt Waschflüssigkeit 13 zugesetzt wird, wie durch den Pfeil 19 angedeutet ist. Alternativ wird die Waschflüssigkeit 13 direkt angesaugt; dies zeigt der Pfeil 21.

Zur Verringerung der Temperatur des Auslaßmediums aus der Sicherheitshülle 1 kann dem Venturiwäscher 15 über eine nicht dargestellte Drosselstelle eine weitere Strahlpumpe vorgeschaltet sein, die als Enthitzer arbeitet und dem Auslaßmedium Waschflüssigkeit 13 zusetzt. Es entsteht damit Sattdampf geringer Temperatur, der eine Überlastung des Venturiwäschers 15 verhindert. Statt einer Strahlpumpe könnte auch eine andere Art Wärmetauscher verwendet werden.

Die Auslaßöffnung des Venturiwäschers 15 mündet in einen Gasraum 27 oberhalb des Flüssigkeitsspiegels 14. An den Gasraum 27 ist eine mit einem Tropfenabscheider 28 beginnende Auslaßleitung 29 angeschlossen, die in einen Kamin 30 führt. Flüssigkeit aus dem Tropfenabscheider 28 gelangt über einen Flüssigkeitsauslaß 31 in das Volumen der Waschflüssigkeit 13 zurück. Die Leitung 31 kann entfallen, wenn der Tropfenabscheider 28 im Behälter 12 im Gasraum 27 angeordnet wird. Ferner kann der Behälter 12 eine Kühleinrichtung, z.B. einen Rohrkühler zur Rückkühlung der Waschflüssigkeit 13 und eine Auffangwanne aufweisen, die bei Leckagen ein Freisetzen der Waschflüssigkeit verhindert.

Das kaminseitige Ende der Auslaßleitung 29 kann mit einer Mischdüse 32 versehen sein. Damit ist in erster Linie eine Strahlpumpe bezeichnet, mit der Umgebungsluft zur Verdünnung und Abkühlung angesaugt wird.

Mit dem Venturiwäscher 15 wird unter Nutzung des ohnehin vorhandenen Druckes in der Sicherheitshülle 1 eine wirksame Aerosolbenetzung und Jodadsorption erreicht. Deshalb gelingt eine Rückhaltung von Aktivitätsträgern mit einem wesentlich kleineren Raumbedarf als bei der bekannten Verwendung.

Bei dem Ausführungsbeispiel nach FIG 3 ist der Tropfenabscheider 28 unterhalb des Flüssigkeitsspiegels 14 angeordnet. Er wird direkt von dem Venturiwäscher 15 beaufschlagt. Der Gasauslaß 34 des Tropfenabscheiders 28 führt zu einem Gasverteiler 35, mit dem das im Venturiwäscher 15 gereinigte Gas gleichmäßig über das Volumen der Waschflüssigkeit 13 verteilt wird. Der Auslaß des Behälters 12 führt in einen Fasertropfenabscheider 37, an den die Auslaßleitung 29 angeschlossen ist. Sie führt schließlich über die Mischdüse 32 wiederum in den Kamin 30. Die im Fasertropfenabscheider 37 anfallende Feuchtigkeit wird über einen Flüssigkeitsauslaß 38 in den Behälter 12 zurückgeführt.

Bei der Ausführungsform nach Figur 2 ist das Gasvolumen 27 durch eine unter den Flüssigkeitsspiegel 14 ragende Trennwand 40 in zwei Bereiche geteilt. Zu beiden Seiten der Trennwand 40 sind in der Waschflüssigkeit 13 zwei Venturiwäscher 15' und 15" angeordnet, die über eine Drosselstelle 41 parallel an die Leitung 3 angeschlossen sind. Die Venturiwäscher 15' und 15" sitzen auf einer unterschiedlichen Höhe unterhalb des Flüssigkeitsspiegels 14. Dies hat zur Folge, daß bei Teillastbetrieb der tiefer gelegene Venturiwäscher 15' wegen des höheren Flüssigkeitsdruckes mehr oder weniger außer Betrieb gesetzt ist. Der höher gelegene Venturiwäscher 15" arbeitet deshalb unter mengenmäßig optimierten Betriebsbedingungen.

Die beiden Seiten des Gasraumes 27 führen über Tropfenabscheider 28', 28" zu der Auslaßleitung 29, die zur weiteren Reinigung der Gase und zur Rückhaltung von Aerosolen mit einem Schwebstoffilter 42 versehen ist. Dem Schwebstoffilter 42 ist eine Drossel 43 vorgeschaltet und die Mischdüse 32 nachgeschaltet.

Bei dem Ausführungsbeispiel nach Figur 3 umfaßt die Auslaßleitung 29 außer dem Fasertropfenabscheider 37 noch die Drossel 43 und das Schwebstoffilter 42, wie es für die Figur 2 bereits dargestellt wurde.

**Patentansprüche**

1. Kernkraftwerk mit einer Sicherheitshülle (1) zum Einschluß von Aktivitätsträgern und mit einem Auslaß (3) als Überdrucksicherung, der aus der Sicherheitshülle (1) über ein Filter und einen Kamin (30) in die Atmosphäre führt, wobei das Filter einen Venturiwäscher (15) und einen Behälter (12) mit einer Waschflüssigkeit (13) umfaßt, in die der Venturiwäscher (15) integriert ist, wobei der Venturiwäscher (15) mit dem Auslaß (3) der Sicherheitshülle (1) verbunden ist und wobei der Behälter (12) an seiner Oberseite einen Gasauslaß (29) aufweist,
   **dadurch gekennzeichnet,** daß dem Venturiwäscher (15) ein Tropfenabscheider (28), eine Drossel (43) und ein Schwebstoffilter (42) nachgeschaltet sind.

2. Kernkraftwerk nach Anspruch 1,
   **dadurch gekennzeichnet,** daß in dem Flüssigkeitsvolumen (13) des Behälters (12) ein von dem Venturiwäscher (15) gespeister Gasverteiler (35) angeordnet ist.

3. Kernkraftwerk nach Anspruch 1 oder 2 , **dadurch gekennzeichnet,** daß dem Tropfenabscheider (28) ein vor der Drossel (43) liegender Fasertropfenabscheider (37) nachgeschaltet ist.

4. Kernkraftwerk nach einem der Ansprüche 1 bis 3, **dadurch gekennzeichnet,** daß mehrere Venturiwäscher (15', 15") parallel geschaltet und in unterschiedlicher Höhe in dem Volumen (13) der Waschflüssigkeit angeordnet sind und daß die Venturiwäscher (15', 15") über durch eine Trennwand (40) geschaffene Teile eines Gasraumes (27) je einen Tropfenabscheider (28' oder 28") speisen.

5. Kernkraftwerk nach einem der Ansprüche 1 bis 4 , **dadurch gekennzeichnet,** daß zwischen dem Gasauslaß (29) und dem Kamin (30) der Tropfenabscheider (28) oder der Fasertropfenabscheider (37) angeordnet ist, deren Flüssigkeitsauslaß (31 bzw. 38) jeweils in den Behälter (12) führt.

6. Kernkraftwerk nach einem der Ansprüche 1 bis 5 , **dadurch gekennzeichnet,** daß der Venturiwäscher (15) über eine Strahlpumpe (18) mit Waschflüssigkeit (13) beaufschlagt wird.

7. Kernkraftwerk nach einem der Ansprüche 1 bis 6, **dadurch gekennzeichnet,** daß dem Venturiwäscher (15) ein Wärmetauscher (23) vorgeschaltet ist.

8. Kernkraftwerk nach einem der Ansprüche 1 bis 7, **dadurch gekennzeichnet,** daß dem Venturiwäscher (15) eine Druckhalte- und Begrenzungsvorrichtung (6) vorgeschaltet ist.

9. Kernkraftwerk nach einem der Ansprüche 1 bis 8, **dadurch gekennzeichnet,** daß die Waschflüssigkeit (13) des Venturiwäschers (15) mit einer Kühleinrichtung versehen ist.

10. Kernkraftwerk nach einem der Ansprüche 1 bis 9, **dadurch gekennzeichnet,** daß unter dem Behälter (12) eine Wanne angeordnet ist.

**Claims**

1. Nuclear power plant comprising a safety casing (1) for containing activity carriers, and having as an excess pressure safety device an outlet (3) leading out of the safety casing (1) into the atmosphere by means of a filter and a

4

flue (30), the filter including a venturi scrubber (15) and a container (12) with a washing fluid (13) in which the venturi scrubber (15) is integrated, the venturi scrubber (15) being connected to the outlet (3) of the safety casing (1), and the container (12) having a gas outlet (29) on its upper side,
characterised in that a drop collector (28), a throttle (43) and an aerosol filter (42) are connected downstream of the venturi scrubber (15).

2. Nuclear power plant according to claim 1, characterised in that in the fluid volume (13) of the container (12) there is arranged a gas distributor (35) fed by the venturi scrubber (15).

3. Nuclear power plant according to claim 1 or 2, chracterised in that a fibre drop collector (37) lying in front of the throttle (43) is connected downstream of the drop collector (28).

4. Nuclear power plant according to one of claims 1 to 3, characterised in that several venturi scrubbers (15', 15") are connected in parallel and are arranged at different heights in the volume (13) of the washing fluid, and in that the venturi scrubbers (15', 15") each feed a drop collector (28' or 28") via parts of a gas chamber (27) produced by a separating wall (40).

5. Nuclear power plant according to one of claims 1 to 4, characterised in that between the gas outlet (29) and the flue (30) there is arranged the drop collector (28) or the fibre drop collector (37) whose fluid outlet (31 or 38) leads respectively into the container (12).

6. Nuclear power plant according to one of claims 1 to 5, characterised in that the venturi scrubber (15) is fed with washing fluid (13) by means of a jet pump (18).

7. Nuclear power plant according to one of claims 1 to 6, characterised in that a heat exchanger (23) is connected upstream of the venturi scrubber (15).

8. Nuclear power plant according to one of claims 1 to 7, characterised in that a pressure maintenance and limiting device (6) is connected upstream of the venturi scrubber (15).

9. Nuclear power plant according to one of claims 1 to 8, characterised in that the washing fluid (13) of the venturi scrubber (15) is provided with a cooling device.

10. Nuclear power plant according to one of claims 1 to 9, characterised in that a bath is arranged below the container (12).

**Revendications**

1. Centrale nucléaire comportant une enceinte de confinement (1) destinée à renfermer des sources d'activités et comportant une évacuation (3) servant de dispositif de sécurité à la surpression et menant de l'enceinte de confinement à l'atmosphère, en passant par un filtre et par une cheminée (30), le filtre comprenant un laveur à venturi (15) et une cuve (12) contenant un liquide de lavage (13) dans laquelle le laveur à venturi (15) est intégré, alors que le laveur à venturi (15) est raccordé à la sortie (3) de l'enceinte de confinement (1), et que la cuve (12) comporte, au niveau de son côté supérieur, une sortie pour le gaz (29),
caractérisée par le fait qu'un séparateur de gouttes (28), un étranglement (43) et un filtre de matières en suspension (42) sont branchés en aval du laveur à venturi (15).

2. Centrale nucléaire selon la revendication 1, caractérisée en ce que dans le volume de liquide (13) de la cuve (12) est disposé un répartiteur de gaz (35) alimenté par le laveur à venturi (15).

3. Centrale nucléaire suivant la revendication 1 ou 2, caractérisée par le fait qu'un séparateur de gouttes à fibres (37) installé en amont de l'étranglement (43) est monté en aval du séparateur de gouttes (28).

4. Centrale nucléaire suivant l'une des revendications 1 à 3, caractérisée par le fait que plusieurs laveurs à venturi (15',15") sont branchés en parallèle et sont disposés à des hauteurs différentes dans le volume (13) du liquide de lavage et que les laveurs à venturi (15',15") alimentent respectivement un séparateur de gouttes (28', 28") par l'intermédiaire de parties d'un espace réservé au gaz (27), formées par une paroi de séparation (40).

5. Centrale nucléaire suivant l'une des revendications 1 à 4, caractérisée par le fait qu'entre l'évacuation pour le gaz (29) et la cheminée (30) est disposé le séparateur de gouttes (28) ou le séparateur de gouttes à fibres (37), dont la sortie pour le liquide (31 ou 38) aboutit respectivement dans la cuve (12).

**6.** Centrale nucléaire suivant l'une des revendications 1 à 5, caractérisée par le fait que le laveur à venturi (15) est chargé par le liquide de lavage (13) par l'intermédiaire d'un éjecteur ou pompe à jet (18).

**7.** Centrale nucléaire suivant l'une des revendications 1 à 6, caractérisée par le fait qu'un échangeur de chaleur (23) est monté en amont du laveur à venturi (15).

**8.** Centrale nucléaire suivant l'une des revendications 1 à 7, caractérisée par le fait qu'un dispositif (6) de maintien de limitation de la pression est branché en amont du laveur à venturi (15).

**9.** Centrale nucléaire suivant l'une des revendications 1 à 8, caractérisé par le fait que le liquide de lavage (13) du laveur à venturi (15) est équipé d'un dispositif de refroidissement.

**10.** Centrale nucléaire suivant l'une des revendications 1 à 9, caractérisée par le fait qu'une cuvette est disposée au-dessous de la cuve (12).

FIG 1

EP 0 269 847 B1

FIG 2

EP 0 269 847 B1

FIG 3

EP 0 269 847 B1